# EUROPEAN PATENT APPLICATION

(11) **EP 2 713 043 A1**
(43) Date of publication of application: **02.04.2014**
(21) Application number: 12186605.7
(22) Date of filing: 28.09.2012
(51) Int. Cl.: F03B 17/06, F03B 11/00, F03B 13/10

(54) **Device for generating energy from flowing water**

(71) Applicant: WFPK Beheer B.V., 1721 AE Broek op Langedijk (NL)
(72) Inventor: Pieneman, William, 1871 AJ Schoorl (NL)
(74) Representative: Bartelds, Erik

(57) **Abstract**

The invention relates to a device for generating energy from flowing water which comprises one or more rotors (2A, 2B) which are placed in the flowing water and which are rotatable about a shaft (4) along a stator (3) placed in the flowing water. There can be two parallel rotors which are rotatable about a shared shaft, which are rotatable in opposite directions along their associated stators and which can be rotatably mounted on each other via mechanical seals (6A, 6B).

The device can further be provided with a screen (19) which is placed upstream of the rotor and the shape of which corresponds to the peripheral shape of the rotor. The screen can be asymmetrical and can be placed such that it enhances the approach flow to a part of the rotor co-rotating with the flow and screens a part of the rotor rotating counter to the flow.

## Description

The invention relates to a device for generating energy from flowing water. Such devices are known in many variants and are attracting increasing interest as means for generating energy in sustainable manner.

As known, a large number of the energy sources currently in use are in principle not inexhaustible. At current levels of consumption the proven reserves of mineral fuels such as oil and natural gas are thus still sufficient for a maximum of several tens or hundreds of years, while with the increasing level of development in the world population this consumption is more likely to increase than decrease. The use of these energy sources moreover causes a number of problems, of which air pollution and the warming of the earth's atmosphere are the best-known.

Sustained efforts are therefore being made to find alternatives, these having been found up to this point in the form of nuclear power and different natural or sustainable energy sources such as wind energy, solar energy, hydroelectric power and the like. These alternative energy sources still have a large number of drawbacks however. Generation of energy by means of nuclear fission thus results in the release of dangerous radiation and radioactive waste for which no processing method has yet been found, while the technique of nuclear fusion, although promising in theory, has not yet been found usable in practice.

Of the sustainable energy sources, wind energy has the most significant drawback that the speed of the wind just above the ground is limited so that wind turbines placed at height are necessary for an efficient energy generation. This results in wind turbines being very conspicuously present in the landscape, which limits public acceptance. The rotating blades of a wind turbine moreover cause considerable noise nuisance. The use of solar energy has the drawback that this form of energy is not available to sufficient extent everywhere. Particularly in the industrialized countries, where the demand for energy is greatest, the number of hours of sunlight is often limited, since these countries lie relatively far from the equator.

Hydroelectric power has the advantage as sustainable energy source that moving water in the form of rivers or tidal water is available in many places, particularly also in places with relatively less sunshine. In contrast to wind turbines, hydroelectric power plants need not be built at locations where people also live, so that public acceptance is greater.

The invention now has for its object to provide an improved hydroelectric power plant which is robust and has a relatively high efficiency, so that considerable power can also be generated in the case of relatively small dimensions. According to the invention this is achieved with a device for generating energy from flowing water, comprising at least one rotor which is placed at least partially in the flowing water and which is rotatable about a shaft along a stator placed at least partially in the flowing water. Placing the rotor and stator in the water together achieves a compact construction and simple installation.

A structurally simple device with a high conversion efficiency is obtained when the stator is substantially disc-shaped and placed parallel to the rotor.

When the rotor is rotatably mounted on the shaft via a mechanical seal a robust construction is obtained which is not susceptible to the influence of the surrounding water.

Recommended for the purpose of increasing the energy yield and the efficiency is that the device is provided with at least two parallel rotors which are rotatable about a shared shaft and which are rotatable in opposite directions along their associated stators. Owing to the opposite rotating movement, vortices and other wake effects of the two rotors cancel each other out in any case at least partially, whereby flow losses are reduced.

In order to enable the relative movement of the rotors under water for a long time and without maintenance, the rotors are preferably rotatably mounted on each other via at least one mechanical seal. This mechanical seal can be water-lubricated.

For an optimal bearing-mounting it is recommended that each rotor carries a mechanical seal and that the rotors are bearing-mounted on each other with their mechanical seals.

At least one of the mechanical seals preferably has a surface here which is curved to some extent. Water can thus penetrate between the bearing surfaces for lubrication purposes.

The stators are advantageously arranged in a space bounded by the rotors and the mechanical seals. The mechanical seals not only function as bearings here, but also as seals.

An outer surface of the at least one rotor is preferably profiled. The water flowing past can thus exert a resistance force on the rotor in order to set it into motion.

The profiled outer surface can here comprise a number of blades extending in radial direction. The water flowing past can thus exert force on the rotor in any position.

For an optimal operation it is recommended that each blade is curved in the rotation direction of the rotor.

Each blade preferably further has a height increasing in radial direction so that the most active part is located the greatest distance from the rotation shaft.

A hydrodynamically optimal design is obtained when each blade has a wave shape in radial direction.

Each blade preferably has an upper edge and a lower edge, and a streamlined surface is formed between an upper edge of a blade and a lower edge of a subsequent blade as seen in the rotation direction of the rotor. The resistance of the rotor can thus be minimized during the rotating movement through the water.

In order to prevent the operation of the device being disrupted by objects entrained in the water the device is preferably provided with a screen which is placed upstream of the rotor and the shape of which substantially corresponds to the peripheral shape of the rotor.

The screen is advantageously asymmetrical and placed such that it enhances the approach flow to a part of the rotor co-rotating with the flow and screens a part of the rotor rotating counter to the flow. This prevents the screen having an adverse effect on the operation of the device.

When the device has a plurality of rotors, a screen is preferably placed upstream of each rotor.

Because the rotors rotate in opposite direction it is recommended for optimal operation that the screens are the mirror image of each other.

The invention is now elucidated on the basis of two embodiments, wherein reference is made to the accompanying drawing, in which:

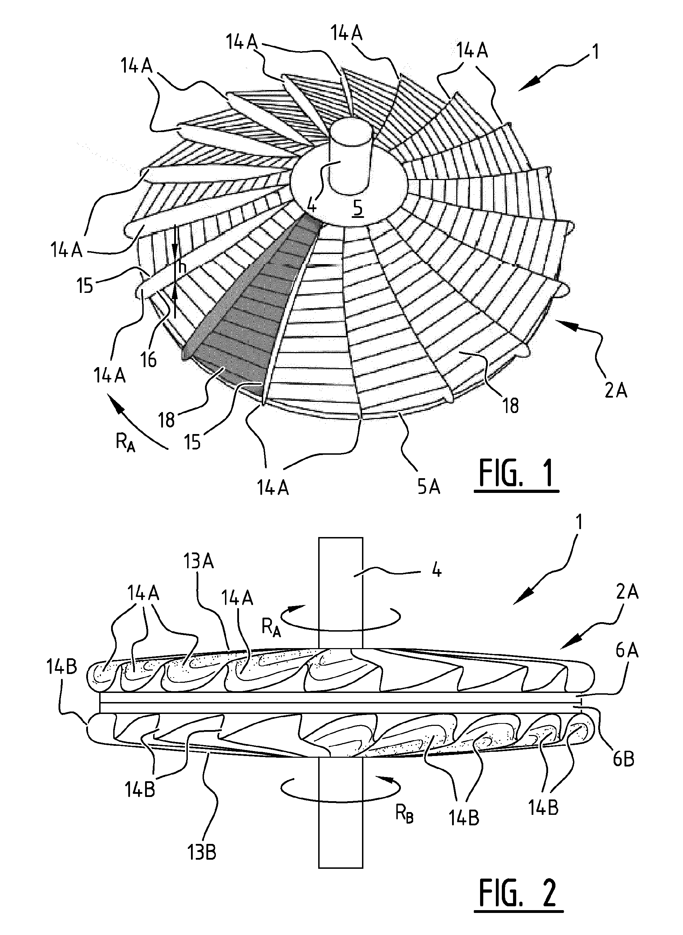

Fig. 1 is a perspective top view of a first embodiment of the device according to the invention,
Fig. 2 is a side view of the device of fig. 1,

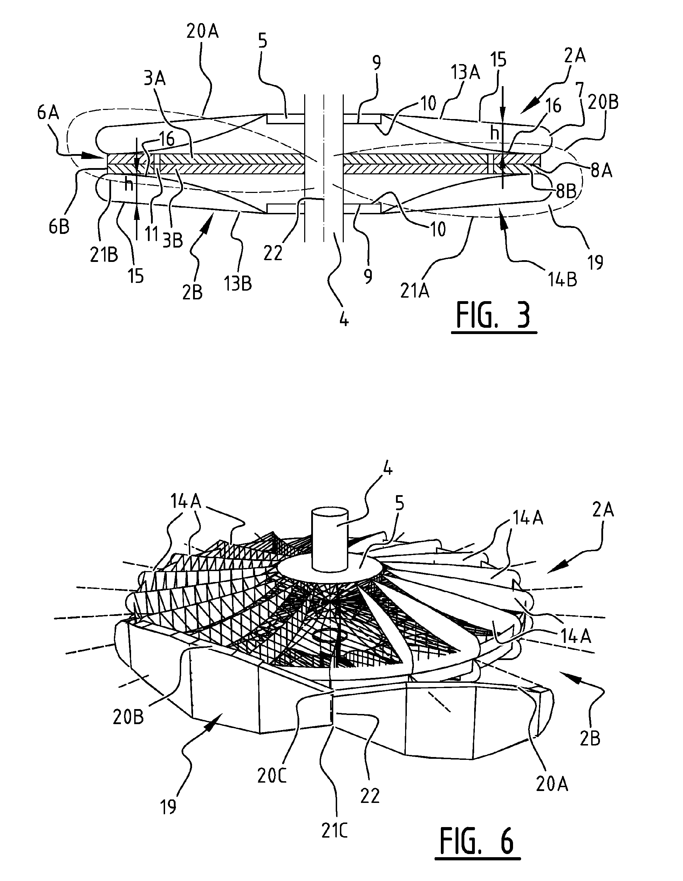

Fig. 3 shows a cross-section over an axial line of the device of fig. 1 and 2 in which the shape and position of the screens are also indicated with broken lines,

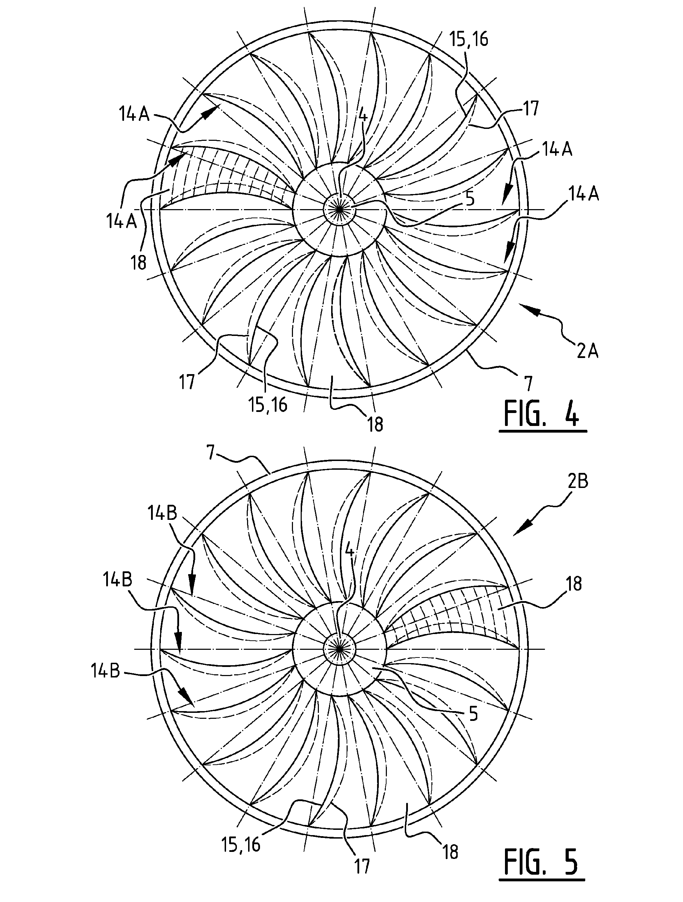

Fig. 4 is a top view of the upper rotor of this device,
Fig. 5 is a bottom view of the lower rotor,
Fig. 6 is a partially cut-away perspective top view of this device in which the screens are also shown,
Fig. 7 is a perspective top view of a part of a bridge with a number of devices according to the invention on either side,
Fig. 8 is a perspective view of a channel having therein a large number of devices according to the invention which are distributed over a number of shafts,
Fig. 9 shows a cross-section through a channel having therein a number of devices in a cascade arrangement,
Fig. 10 is a perspective view with exploded parts of an alternative embodiment of the device according to the invention, and

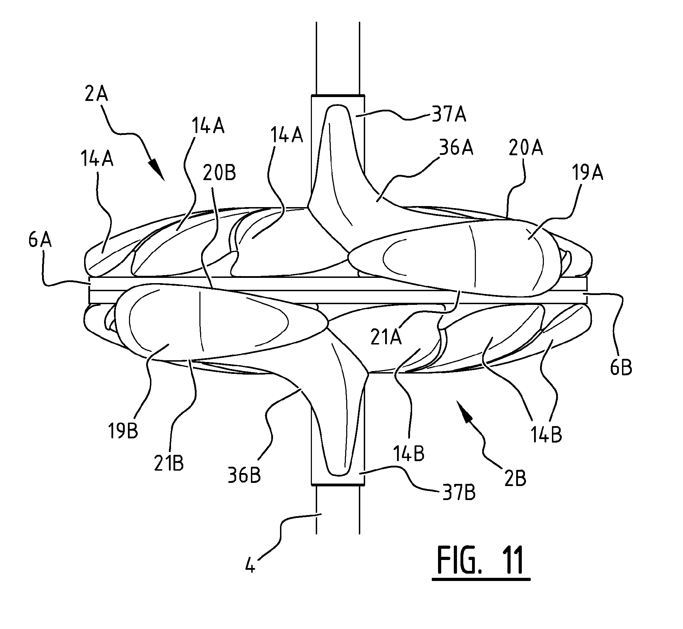

Fig. 11 is a side view of the device of fig. 10, including the screens.

In the shown embodiment a device 1 for generating energy from flowing water W comprises two pairs of rotors 2A, 2B and stators 3A, 3B placed wholly or partially in the flowing water W. The two rotors 2A, 2B are rotatable about a shared shaft 4 and each move here along their associated stator 3A, 3B. Rotors 2 and stators 3 are each disc-shaped and all placed mutually parallel and adjacently of each other perpendicularly of rotation shaft 4 of rotors 2.

Provided for the bearing-mounting of rotors 2 and the sealing between the different components are mechanical seals 5, 6. A mechanical seal 5 is thus arranged between each rotor 2A, 2B and shaft 4, and two mechanical seals 6A, 6B, with which rotors 2A, 2B are bearing-mounted on each other, are even provided between peripheral edges 7 of rotors 2A, 2B. A good bearing-mounting is important here because rotors 2A, 2B rotate in opposite directions around shaft 4. Owing to the opposite rotation directions, vortices and other wake effects caused by the movement of rotors 2A, 2B in the water W cancel each other out, thereby reducing friction losses.

The mechanical seals 5, 6 are water-lubricated in this embodiment. In order to ensure that water can penetrate between the mutually facing surfaces 8A, 8B of mechanical seals 6A, 6B or between surface 9 of mechanical seal 5 and the outer surface 10 of rotor 2A, 2B, the relevant surfaces 8, 9 of mechanical seals 5, 6 are curved to some extent. These surfaces 8, 9 can for this purpose be ground in diabolo shape so that they make line contact with the opposite surface 8, 10. Owing to their particular form and construction, the mechanical seals 5, 6 can in the shown embodiment withstand the high pressures which occur and the high temperatures resulting from the friction between the different components. Mechanical seals 5, 6 can withstand temperatures of up to 1800°C.

Rotors 2A, 2B and the mechanical seals 6A, 6B arranged along their periphery 7 define therebetween a sealed space 11 in which stators 3A, 3B are received. Rotors 2 and stators 3 are provided in known manner with magnets and wire windings (not shown here), whereby the rotating movement of each rotor 2A, 2B along the associated stator 3A, 3B results in generation of electric current which is discharged via a corresponding line 12A, 12B through shaft 4. This current can be supplied to an electricity grid.

Rotors 2A, 2B are set into motion by the resistance of the water W flowing past. In order to increase the resistance force and determine the direction of movement the outer surfaces 13A, 13B of rotors 2A, 2B are provided with a specific profile. This profiled outer surface 13A, 13B here defines as it were a series of blades 14A, 14B, each extending in radial direction from shaft 4 to the periphery 7 of each rotor 2A, 2B.

In the shown embodiment blades 14, which have an upper edge 15 and a lower edge 16, are each curved in the rotation direction of the relevant rotor 2. Because rotors 2A, 2B are adapted to rotate in opposite directions, the associated blades 14A, 14B are also curved in opposite directions. Each blade 14 has a distance between upper and lower edges 15, 16 which increases from shaft 4 to outer periphery 7, so an increasing height *h*. Each blade 14 is further hollow between upper and lower edges 15, 16; as seen in the rotation direction of rotor 2 the surface 17 of blade 14 protrudes rearward out of a plane defined by upper and lower edges 15, 16. Finally, a streamlined surface 18 is defined in each case between the upper edge 15 of a blade 14 and the lower edge 16 of a subsequent blade 14 as seen in the rotation direction of rotor 2. This shape of the blades 14 is modelled on a wave with a curling wave crest. Owing to this shape the water W flowing past on the one hand exerts a great force on rotor 2, while on the other the resistance of rotor 2 in the return part of the rotation, when blades 14 move counter to the flow direction of the water W, is minimal. The efficiency of each rotor 2 is thereby very high.

Placed upstream of rotors 2A, 2B is a screen 19, the shape of which as seen in top view roughly corresponds to the shape of the outer periphery 7 of rotors 2A, 2B. This screen 19 serves to prevent rotors 2A, 2B being damaged by objects which are carried along by the flowing water W and could collide with rotors 2A, 2B. Because the shape of screen 19 corresponds to that of outer periphery 7 of rotors 2A, 2B, a channel of roughly constant width is formed between screen 19 and rotors 2A, 2B. Because one side of each rotor 2A, 2B co-displaces with the flowing water W and the other side moves counter thereto, screen 19 takes an asymmetrical form. Screen 19 has an upper edge 20, a part 20A of which is higher at the position of the return part of rotor 2A, 2B than a part 20B at the position of the co-displacing part of rotor 2A, 2B. The approach flow to the part of rotor 2A, 2B which has to be set into motion by the water W flowing past is thus enhanced, while the other part of rotor 2A, 2B is screened in order to further reduce the resistance.

Since in the shown embodiment device 1 has two rotors 2A, 2B placed one above the other and rotating in opposite directions, two screens placed one above the other are also necessary. In the shown embodiment these screens are joined together to form a single screen, the lower half of which is the mirror image of the upper half. Screen 19 is in fact symmetrical relative to a central point such that lower edge 21 has a part 21A protruding relatively far downward and located below the low part 20B of the upper edge, while a less deeply protruding part 21B of lower edge 21 is located below the higher lying part 20A of upper edge 20. Parts 20A, 20B and 21A, 21B are otherwise also each curved and come together at a point 20C, 21C located relatively close to the centre so that screen 19 in fact has a central constriction. The upper and lower edges 20, 21 of screen 19 also come together again toward the ends so that the screen tapers there. This particular shape of the screen results in an optimal approach flow to rotors 2A, 2B.

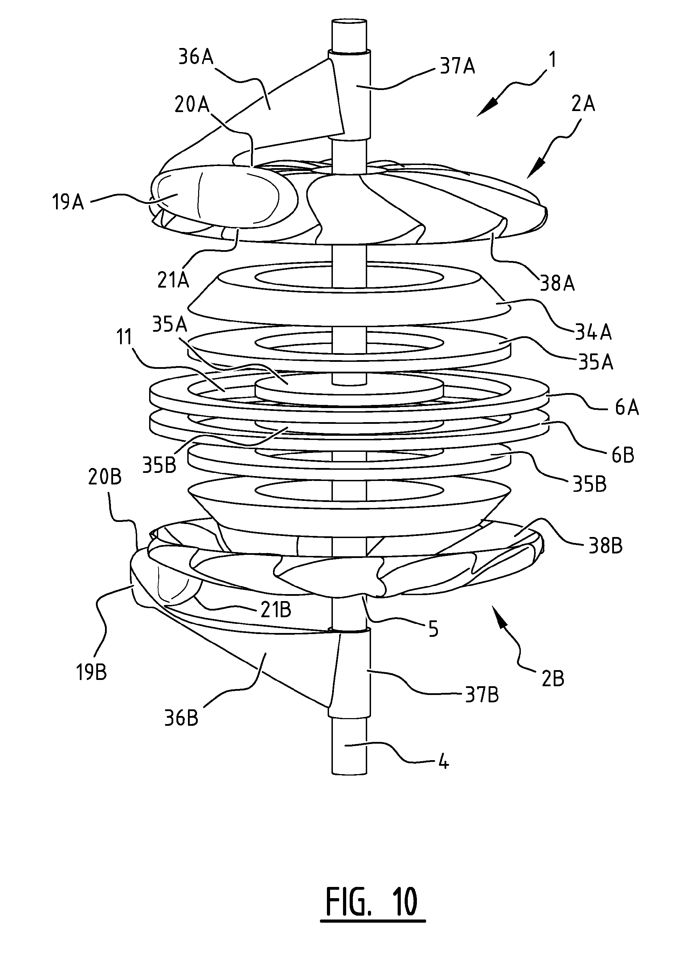

In an alternative embodiment of the energy generating device 1 (fig. 10) each rotor 2A, 2B is formed by a profiled cover 38A, 38B which defines blades 14A, 14B and a ring 34A, 34B which is mounted thereon and carries the magnets or wire windings for generating electric current. In this embodiment the stator 3A, 3B is further embodied as a ring received in a space 11 which is bounded by the external mechanical seals 6A, 6B and two internal mechanical seals 35A, 35B. The annular stators 3A, 3B once again carry magnets or wire windings here for the purpose of generating electric current. It will be apparent that, when rings 34A, 34B of rotors 2A, 2B carry magnets, stators 3A, 3B are provided with wire windings and, when rings 34A, 34B comprise wire windings, stators 3A, 3B carry magnets.

In the alternative embodiment of device 1 shown here each rotor 2A, 2B is provided with its own screen 19A, 19B. In the shown embodiment each screen 19 extends only in front of the part of rotor 2A, 2B rotating counter to the flow direction. The approach flow to the part of rotors 2A, 2B which has to be set into motion by the water W flowing past is therefore not influenced by the presence of screen 19A, 19B, or in any case at best enhanced. The two screens 19A, 19B take a streamlined form and together form to some extent the boundary of a flow channel to rotors 2A, 2B. Each screen 19A, 19B is carried by an arm 36A, 36B mounted on a sleeve 37A, 37B placed round shaft 4. Arms 36A, 36B also take a streamlined form and contribute toward a good approach flow to rotors 2A, 2B.

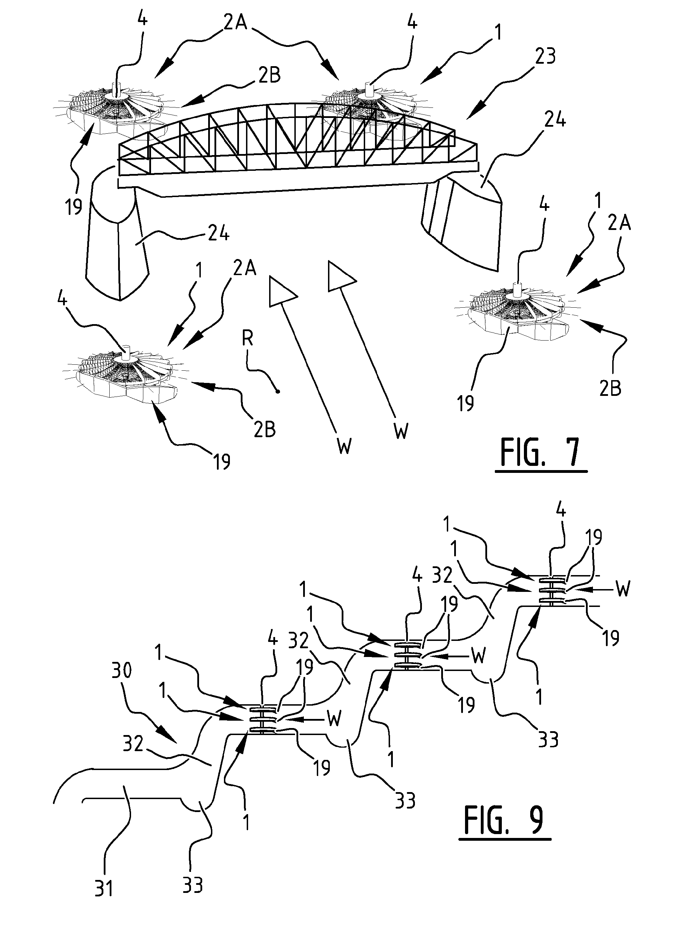

Device 1 can be placed anywhere where water W flows. Figure 7 shows a placing in a river R. In the shown embodiment four devices 1 are placed here on either side of a bridge 23. Devices 1 are placed in line with piers 24 so as not to hinder shipping traffic.

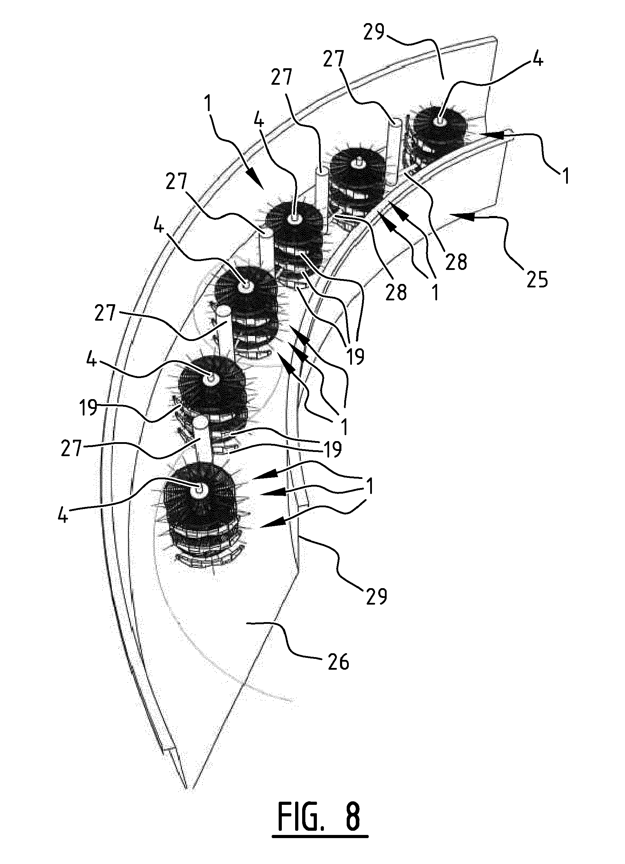

It is also possible to place a plurality of devices 1 one above the other on a shared shaft 4 (figure 8) . Multiple stacks of devices 1 can moreover be placed successively as seen in flow direction of the water W. In the shown embodiment six of such stacks are placed in a channel 25 formed in a bend B of the river R. Placed on the bottom 26 of channel 25 are uprights 27 from which the shafts 4 of stacked devices 1 are suspended by means of spacers 28. Channel 25 is relatively narrow, the distance between walls 29 and periphery 7 of each rotor 2 being roughly equal to the diameter of rotor 2. Relatively high flow speeds are achieved in such a narrow channel 25, whereby rotors 2 will rotate relatively quickly and devices 1 will thus generate a great deal of energy. The channel can otherwise be provided at its ends with lock gates (not shown here), whereby it can be drained for maintenance of devices 1. Channel 25 can of course also be empty during construction of devices 1.

Figure 9 shows yet another arrangement, wherein a number of stacks of devices 1 are placed in a tunnel tube 30 which is for instance arranged in a mountainside. Owing to the drop in tunnel tube 30 water will flow past devices 1 at high speed and thus generate a large amount of energy. Tunnel tube 30 is formed in the shown embodiment as a cascade with horizontal segments 31 which are connected by substantially vertical segments 32. In order to calm the flow of water W to some extent upstream of devices 1, each vertical segment 32 is provided with an outflow 33 in which the cascading water is collected.

Although the invention is elucidated above on the basis of a number of embodiments, it will be apparent that it is not limited thereto. The shape of the rotor can thus be chosen differently than shown and described here, while the shape and placing of the stator can also be modified. A single rotor can also be applied or, on the contrary, more than two rotors can be placed one just above another. The dimensions of the device can further also be varied within wide limits. It is thus for instance possible to envisage placing a small version of the device in a domestic water pipe, for instance a drain under a sink. The scope of the invention is therefore defined solely by the following claims.

## Claims

1. Device for generating energy from flowing water, comprising at least one rotor which is placed at least partially in the flowing water and which is rotatable about a shaft along a stator placed at least partially in the flowing water.

2. Device as claimed in claim 1, **characterized in that** the stator is substantially disc-shaped and placed parallel to the rotor.

3. Device as claimed in claim 1 or 2, **characterized in that** the rotor is rotatably mounted on the shaft via a mechanical seal.

4. Device as claimed in any of the foregoing claims, **characterized by** at least two parallel rotors which are rotatable about a shared shaft and which are rotatable in opposite directions along their associated stators.

5. Device as claimed in claim 4, **characterized in that** the rotors are rotatably mounted on each other via at least one mechanical seal.

6. Device as claimed in claim 5, **characterized in that** each rotor carries a mechanical seal and the rotors are bearing-mounted on each other with their mechanical seals.

7. Device as claimed in claim 6, **characterized in that** at least one of the mechanical seals has a surface which is curved to some extent.

8. Device as claimed in claim 6 or 7, **characterized in that** the stators are arranged in a space bounded by the rotors and the mechanical seals.

9. Device as claimed in any of the foregoing claims, **characterized in that** an outer surface of the at least one rotor is profiled.

10. Device as claimed in claim 9, **characterized in that** the profiled outer surface comprises a number of blades extending in radial direction.

11. Device as claimed in claim 10, **characterized in that** each blade is curved in the rotation direction of the rotor.

12. Device as claimed in claim 10 or 11, **characterized in that** each blade has a height increasing in radial direction.

13. Device as claimed in any of the claims 10-12, **characterized in that** each blade has a wave shape in radial direction.

14. Device as claimed in any of the claims 10-13, **characterized in that** each blade has an upper edge and a lower edge, and a streamlined surface is formed between an upper edge of a blade and a lower edge of a subsequent blade as seen in the rotation direction of the rotor.

15. Device as claimed in any of the foregoing claims, **characterized by** a screen which is placed upstream of the rotor and the shape of which substantially corresponds to the peripheral shape of the rotor.

16. Device as claimed in claim 15, **characterized in that** the screen is asymmetrical and placed such that it enhances the approach flow to a part of the rotor co-rotating with the flow and screens a part of the rotor rotating counter to the flow.

17. Device as claimed in claims 4 and 15, **characterized in that** a screen is placed upstream of each rotor.

18. Device as claimed in claims 16 and 17, **characterized in that** the screens are the mirror image of each other.
